# EUROPEAN PATENT SPECIFICATION

(11) **EP 2 487 975 B1**
(45) Date of publication and mention of the grant of the patent: **26.11.2014**
(21) Application number: 10823032.7
(22) Date of filing: 14.09.2010
(51) Int. Cl.: H04W 8/24

(54) **METHOD AND APPARATUS FOR REPORTING CAPABILITY INFORMATION**
VERFAHREN UND VORRICHTUNG ZUR MELDUNG VON KAPAZITÄTSINFORMATIONEN
PROCÉDÉ ET DISPOSITIF DE COMMUNICATION D'INFORMATIONS DE CAPACITÉ

(30) Priority: 12.10.2009 CN 200910181147
(43) Date of publication of application: 15.08.2012
(73) Proprietor: Huawei Technologies Co., Ltd., Guangdong 518129 (CN)
(72) Inventor: WANG, Zhixi, Shenzhen Guangdong 518129 (CN); FANG, Ming, Shenzhen Guangdong 518129 (CN); QIN, Jun, Shenzhen Guangdong 518129 (CN); ZHAO, Yang, Shenzhen Guangdong 518129 (CN)
(74) Representative: Thun, Clemens
(86) International application number: PCT/CN2010/076870
(87) International publication number: WO 2011/044802

(56) References cited:
- EP-A1- 1 307 036
- WO-A1-02/096040
- WO-A1-2007/098783
- WO-A1-2009/021562
- CN-A- 101 023 686
- CN-A- 101 395 882
- US-A1- 2007 135 165
- US-A1- 2007 224 990
- "3rd Generation Partnership Project; Technical Specification Group Services and System Aspects; Speech codec speech processing functions; Adaptive Multi-Rate - Wideband (AMR-WB) speech codec; Transcoding functions (Release 8)", 3GPP STANDARD; 3GPP TS 26.190, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 December 2008 (2008-12-01), pages 1-51, XP050370005,

## Description

### FIELD OF THE INVENTION

The present invention relates to the field of network communication technologies, and in particular, to a method and an apparatus for reporting capability information.

### BACKGROUND OF THE INVENTION

In a process of setting up a call, a terminal for supporting Adaptive Multi Rate Wideband (adaptive multi rate wideband, AMR-WB) should report capability information of supporting the AMR-WB to a Mobile Switching Center (mobile switching center, MSC).

A method for reporting AMR-WB capability information is: In a stage of assigning a Traffic Channel (traffic channel, TCH) when a terminal originates a calling call, the terminal sends a Setup message that contains a Speech Version (speech version) field of Bearer Capability IE (bearer capability information element) to an MSC, where the speech version field carries the AMR-WB capability information which indicates whether the terminal supports the AMR-WB; in a stage of assigning a TCH when the terminal receives a call, the terminal sends a Call Confirm (call confirm) message that contains a Speech Version field of Bearer Capability IE to an MSC, where the speech version field carries the AMR-WB capability information which indicates whether terminal supports the AMR-WB.

Not all MSCs can correctly process the AMR-WB capability information reported by the terminal, and therefore, the MSCs incapable of correctly processing the AMR-WB capability information reported by the terminal incurs call failure due to incorrect processing of the AMR-WB, which leads to failure of setting up a voice service.

US 2007/0224990 A1 discloses a technique for transferring new capability information in a network. In this known process, a user equipment is informed that a network supports the transfer of new capability information. If this is the case, the user equipment sends in a first step a service request message to a mobile switching center. After the mobile switching center has responded with a service accept message, the user equipment transfers new capability information.

Further, WO 2007/098783 A1 discloses a method wherein a MSC receives information regarding the question whether a terminal supports a specific wideband codec. Here, the terminal forwards the information without determining in advance whether the MSC supports the transfer of such capability information.
Finally, US 2007/0135165 A1 discloses a scenario where a mobile switching center sends a request to a radio network controller relating to the use of at least one subset of a codec mode configuration for the establishment of a transcoder-free operation connection. It is checked whether the at least one requested subset is supported by the radio network controller. If the at least one subset of at least one codec mode configuration is supported, a transcoder-free operation connection to the switching unit and to the communication terminal is established by the radio network controller.

### SUMMARY OF THE INVENTION

Embodiments of the present invention provide a method and an apparatus for reporting capability information.

An embodiment of the present invention provides a method for reporting capability information, and the method includes:
determining, by a base station controller, a mobile switching center corresponding to a current service of a terminal through signaling interaction with the mobile switching center;
judging whether the mobile switching center corresponding to the current service supports an adaptive multi rate wideband capability according to preset information or a message sent by the mobile switching center corresponding to the current service; and
sending indication information to a calling terminal and/or a called terminal of the service according to a judgment result, where the indication information indicates whether the mobile switching center supports an adaptive multi rate wideband capability, and the indication information is used to notify the terminal of whether to report adaptive multi rate wideband capability information to the mobile switching center corresponding to the current service.

An embodiment of the present invention provides a base station controller, which includes:
a determining module, configured to determine a mobile switching center corresponding to a current service through signaling interaction between the base station controller and the mobile switching center;
a judging module, configured to judge whether the mobile switching center corresponding to the current service supports an adaptive multi rate wideband capability according to preset information or a message sent by the mobile switching center corresponding to the current service; and
a third indication information sending module, configured to send indication information to a calling terminal and/or a called terminal of the service according to a judgment result, where the indication information indicates whether the mobile switching center supports an adaptive multi rate wideband capability, and the indication information is used to notify the terminal of whether to report adaptive multi rate wideband capability information to the mobile switching center corresponding to the service.

Through the description about the technical solution above, it is evident that the method for reporting capability information provided in the embodiments of the present invention avoids call failure caused by the terminal's reporting the adaptive multi rate wideband capability information, and improves the call success rate.

### BRIEF DESCRIPTION OF THE DRAWINGS

FIG. 1 is a flowchart of a method for reporting capability information according to a first embodiment of the present invention;
FIG. 2 is a flowchart of a method for reporting capability information according to a second embodiment of the present invention;
FIG. 3 is a flowchart of a method for reporting capability information according to a third embodiment of the present invention;
FIG. 4 is a flowchart of a method for reporting capability information according to a fourth embodiment of the present invention;
FIG. 5 is a flowchart of a method for reporting capability information according to a fifth embodiment of the present invention;
FIG. 6 is a flowchart of a method for reporting capability information according to a sixth embodiment of the present invention;
FIG 7 is a flowchart of a method for reporting capability information according to a seventh embodiment of the present invention;
FIG 8 is a flowchart of a method for reporting capability information according to an eighth embodiment of the present invention;
FIG 9 is a schematic diagram of a mobile switching center according to a ninth embodiment of the present invention;
FIG. 10 is a schematic diagram of a base station controller according to a tenth embodiment of the present invention;
FIG. 11 is a schematic diagram of a terminal device according to an eleventh embodiment of the present invention;
FIG. 12 is a schematic diagram of a base station controller according to a twelfth embodiment of the present invention; and
FIG. 13 is a schematic diagram of a terminal device according to a thirteenth embodiment of the present invention.

### DETAILED DESCRIPTION OF THE EMBODIMENTS AND EXAMPLES

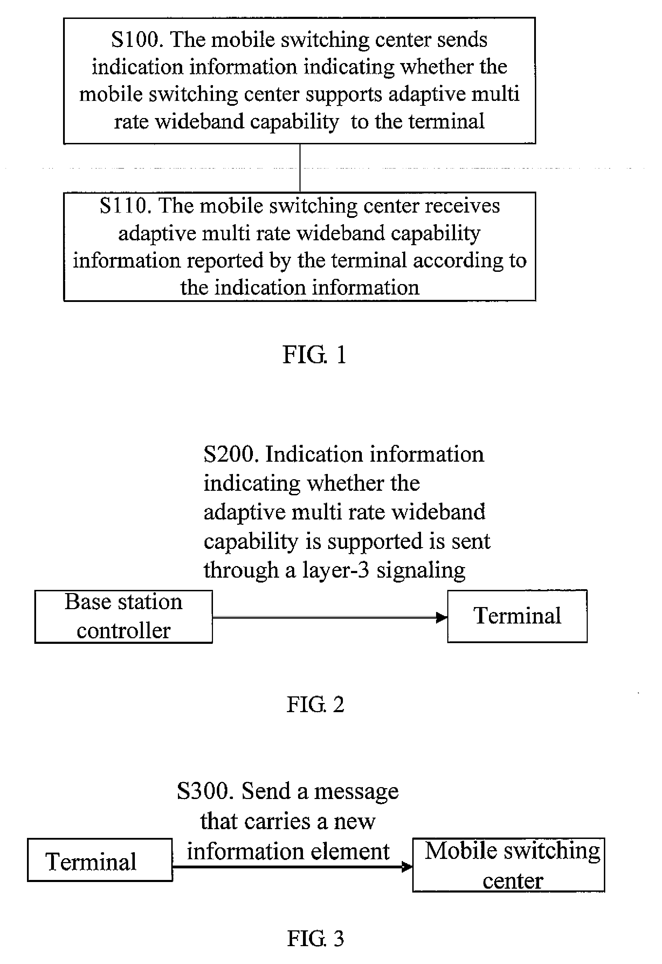

Example 1: a method for reporting capability information. The procedure of the method is shown in FIG. 1.

In FIG. 1, S100. A mobile switching center that sets up a service sends indication information to a terminal, where the indication information indicates whether an adaptive multi rate wideband capability is supported by the mobile switching center. The indication information is used to notify the terminal of whether to report adaptive multi rate wideband capability information to the mobile switching center. The indication information indicates whether the mobile switching center that sets up the service supports the adaptive multi rate wideband capability, and the indication information also indicates whether the mobile switching center allows the terminal to report the adaptive multi rate wideband capability. Therefore, the indication information indicating whether the mobile switching center supports the adaptive multi rate wideband capability is also known as indication information indicating whether the terminal is allowed to report the adaptive multi rate wideband capability, and is referred to as "indication information" in the following embodiments.

In S100, the mobile switching center that sets up a service may send the indication information to the terminal on its own initiative. The mobile switching center sending the indication information on its own initiative means that: The mobile switching center that sets up a service sends the indication information to the terminal in the case that mobile switching center receives a relevant request. The relevant request is a capability information reporting request, namely, a request for the indication information.

The mobile switching center that sets up a service in S100 may send indication information to the terminal reactively. That is, the mobile switching center sends the indication information to the terminal according to a capability information reporting request after receiving the request from the terminal, where the indication information indicates whether the mobile switching center supports the adaptive multi rate wideband capability.

The mobile switching center may send the indication information to the terminal before the terminal sends a Setup (setup) message or a Call Confirm (call confirm) message to the mobile switching center, regardless of whether the mobile switching center sends the indication information to the terminal on its own initiative or reactively. The mobile switching center may send the indication information to the terminal by using an existing field in an existing message sent to the terminal, or by using a new message.

An example of using an existing field in an existing message to send the indication information to the terminal is: The mobile switching center uses an idle bit(s) of the existing field in a connection management service accept message or a cipher mode command to carry the indication information, and sends the connection management service accept message or the cipher mode command to the terminal.

If the indication information is sent to the terminal by using a new message, the mobile switching center may send the new message to the terminal directly, namely, send the new message separately. In other words, the new message is not carried in an information element of another message. The mobile switching center may also add the new message as an independent information element into another message sent by the mobile switching center to the terminal, and send the another message to the terminal. That is, a new information element is added in the another message to carry the new message. Besides, the mobile switching center may add the new message into an existing information element of another message sent by the mobile switching center to the terminal. For ease of description, the new information element and the existing information element that carries the new message may be uniformly called a dedicated information element of information indicating whether the adaptive multi rate wideband capability is supported, and is briefly known as a dedicated information element of indication information in this example. It should be noted that the dedicated information element of indication information may carry only the new message, or carry the new message together with other information. The dedicated information element of indication information is a name assigned to the information element that carries the new message for ease of subsequent description. This example does not restrict a specific implementation way in which the mobile switching center sends the indication information to the terminal.

An example of the mobile switching center sending the indication information to the terminal on its own initiative is: When the terminal is a calling terminal, the mobile switching center may send the indication information to the terminal on its own initiative before sending a Connection Management (connection management, CM) Service Accept message or a Cipher Mode command to the terminal. The mobile switching center may also send the indication information to the terminal on its own initiative at the same time when sending the CM Service Accept message or the Cipher Mode command to the terminal. That is, the mobile switching center may add the indication information into a dedicated information element of the indication information in the CM Service Accept message or the Cipher Mode command, and send the message or command to the terminal.

Another example of the mobile switching center sending the indication information to the terminal on its own initiative is: When the terminal is a called terminal, the mobile switching center may send the indication information to the terminal on its own initiative before sending a Setup message to the terminal; the mobile switching center may also send the indication information to the terminal on its own initiative at the same time when sending the Setup message to the terminal, namely, the mobile switching center adds the indication information into a dedicated information element of indication information in the Setup message, and sends the Setup message to the terminal.

An example of the mobile switching center sending the indication information to the terminal reactively is: After the mobile switching center receives the capability information reporting request from the terminal, and, before the terminal sends a Setup message or a Call Confirm message to the mobile switching center, the mobile switching center sends the indication information to the terminal. Also, the mobile switching center may send the indication information to the terminal reactively before sending the CM Service Accept message or the Cipher Mode command or the Setup message to the terminal; or the mobile switching center may send the indication information to the terminal reactively at the same time when sending the CM Service Accept message or the Cipher Mode command or the Setup message to the terminal.

The capability information reporting request, which is sent by the terminal to the mobile switching center, may be sent by using an existing field in an existing message sent by the terminal to the mobile switching center, or by using a new message.

An example of using the existing field in an existing message to send the capability information reporting request to the mobile switching center is: The terminal uses an idle bit(s) of the existing field in a Connection Management Service Request message to carry the capability information reporting request, and sends the Connection Management Service Request message to the mobile switching center.

When the terminal uses a new message to send the capability information reporting request to the mobile switching center, the terminal may send the new message directly, or add the new message as an independent information element into an existing message sent by the terminal to the mobile switching center and send the message to the mobile switching center, namely, a new information element is added into an existing message sent by the terminal to the mobile switching center to carry the new message. The existing message mentioned here is a Connection Management Service Request message, for example. Alternatively, the terminal may add the capability information reporting request into an existing information element of another message sent by the terminal to the mobile switching center. For ease of description, the information element that carries the new message in the message sent by the terminal to the mobile switching center may be called a dedicated information element of a capability information reporting request. Also, the dedicated information element of a capability information reporting request may carry only the new message, or carry the new message together with other information. This example does not restrict a specific implementation way in which the terminal sends the capability information reporting request to the mobile switching center.

After the mobile switching center receives the capability information reporting request sent by the terminal, if the mobile switching center supports adaptive multi rate wideband, the mobile switching center sends indication information to the terminal to indicate permission of reporting the adaptive multi rate wideband capability. In this case, the indication information may further indicate that the mobile switching center supports the adaptive multi rate wideband capability. If the mobile switching center does not support adaptive multi rate wideband, the mobile switching center may send no indication information to the terminal. However, if the mobile switching center does not support adaptive multi rate wideband, the mobile switching center may send indication information to the terminal to indicate no permission of reporting the adaptive multi rate wideband capability. In this case, the indication information may further indicate that the mobile switching center does not support the adaptive multi rate wideband capability.

It should be noted specially that, if the mobile switching center does not support adaptive multi rate wideband, the mobile switching center may be unable to identify the capability information reporting request sent by the terminal, and may discard the received capability information reporting request directly. In this way, the mobile switching center sends no indication information indicating whether the adaptive multi rate wideband capability is supported to the terminal. After the terminal sends the capability information reporting request, if the terminal still receives no indication information from the mobile switching center when sending the Setup message or the Call Confirm message, the terminal determines that the mobile switching center does not allow reporting of the adaptive multi rate wideband capability information, and therefore, the terminal reports no adaptive multi rate wideband capability information to the mobile switching center.

This example may further include S¶ 110 optionally: The mobile switching center receives the adaptive multi rate wideband capability information reported by the terminal according to the indication information. The adaptive multi rate wideband capability information reported by the terminal is the adaptive multi rate wideband capability information reported by the terminal to the mobile switching center after the terminal determines that the received indication information indicates that the mobile switching center allows reporting of the adaptive multi rate wideband capability. The terminal mentioned here is the terminal that supports the adaptive multi rate wideband capability.

It should be noted that, after the terminal receives the indication information sent by the mobile switching center, if the terminal determines that the received indication information indicates that the mobile switching center does not allow supporting of the adaptive multi rate wideband capability information, the terminal reports no adaptive multi rate wideband capability information to the mobile switching center, which avoids call failure caused by the terminal's reporting the adaptive multi rate wideband capability information when the mobile switching center does not support the adaptive multi rate wideband capability.

In S 110, the adaptive multi rate wideband capability information sent by the terminal to the mobile switching center may be sent by using an existing field in an existing message sent by the terminal to the mobile switching center, or by using a new message.

An example of using the existing field in an existing message to send the adaptive multi rate wideband capability information from the terminal to the mobile switching center is: The terminal uses an idle bit(s) of an existing field in a Setup message to carry the adaptive multi rate wideband capability information, and sends the Setup message to the mobile switching center.

When the terminal uses a new message to send the adaptive multi rate wideband capability information to the mobile switching center, the terminal may send the new message directly, or add the new message as an independent information element into an existing message sent by the terminal to the mobile switching center and send the message to the mobile switching center, namely, a new information element is added into an existing message sent by the terminal to the mobile switching center to carry the new message. The existing message mentioned here is a Setup message or a Call Confirm message, for example. Alternatively, the terminal may add the adaptive multi rate wideband capability information into an existing information element of another message sent by the terminal to the mobile switching center. For ease of description, the information element that carries the new message in the message sent by the terminal to the mobile switching center may be called a dedicated information element of adaptive multi rate wideband capability information. Also, the dedicated information element of adaptive multi rate wideband capability information may carry only the new message, or carry the new message together with other information. This example does not restrict a specific implementation way in which the terminal sends the adaptive multi rate wideband capability information to the mobile switching center.

An example of the mobile switching center receiving the adaptive multi rate wideband capability information from the terminal is: The mobile switching center receives a Setup message sent by the terminal, and obtains the adaptive multi rate wideband capability information reported by the terminal from a SPEECH VERSION field of a Bearer Capability Information Element of the Setup message. Another example of the mobile switching center receiving the adaptive multi rate wideband capability information from the terminal is: The mobile switching center receives a Setup message or a Call Confirm message sent by the terminal, and obtains the adaptive multi rate wideband capability information reported by the terminal from a new information element carried in the message. This example does not restrict a specific implementation way in which the mobile switching center obtains the adaptive multi rate wideband capability information reported by the terminal from the message sent by the terminal.

Through the description about Example 1 above, it is evident that, after the mobile switching center sends indication information to the terminal, the terminal knows whether adaptive multi rate wideband capability information needs to be reported to the mobile switching center according to the information sent by the mobile switching center. Besides, the mobile switching center in Example 1 does not receive the adaptive multi rate wideband capability information reported by the terminal unless the mobile switching center supports the adaptive multi rate wideband capability, and therefore, Example 1 can avoid call failure without upgrading the base station controller. When the MSC resource pool technology is applied, although a BSC may be connected to any MSC in an MSC resource pool, because the indication information is delivered by the mobile switching center in the call to the terminal, Example 1 can correctly indicate to the terminal whether to report the adaptive multi rate wideband capability to the mobile switching center for a specific call, which avoids the following problem when the MSC resource pool technology is applied: The terminal always report the adaptive multi rate wideband capability information, which leads to call failure, or the terminal never reports the adaptive multi rate wideband capability information, which leads inefficiency of using the adaptive multi rate wideband capability of the terminal. Besides, because the indication information in Example 1 is sent from the mobile switching center to the terminal, the call failure, which occurs because the base station controller does not support a Packet SI Status message, is avoided when SI3 is delivered through the Packet SI Status message.

Example 2: a method for reporting capability information. The procedure of the method is shown in FIG 2.

In FIG. 2, S200. A base station controller sends indication information to a terminal through layer-3 signaling in a process of setting up a circuit domain service, where the indication information indicates whether a mobile switching center supports an adaptive multi rate wideband capability. The indication information is used to notify the terminal of whether to report adaptive multi rate wideband capability information to the mobile switching center, and the indication information indicates whether the mobile switching center supports the adaptive multi rate wideband capability.

Through preset information or by other means, the base station controller knows whether the mobile switching center connected to it supports the adaptive multi rate wideband capability.

The base station controller may use an idle bit(s) in the existing layer-3 signaling in the process of setting up a circuit domain service to send the indication information, or use a new message to send the indication information to the terminal. That is, the base station controller adds the new message into a dedicated information element of indication information of the layer-3 signaling, and sends the layer-3 signaling to the terminal.

An example of the base station controller using a field in an existing message to send the indication information is: The base station controller adds the indication information into an idle bit(s) of an Immediate Assignment message, and sends the Immediate Assignment message to the terminal.

When the base station controller uses a new message to send the indication information to the terminal, the base station controller may add the new message as an independent information element into layer-3 signaling sent by the base station controller to the terminal, and send the layer-3 signaling to the terminal. The independent information element is briefly known as a dedicated information element of indication information. This example does not restrict a specific implementation way in which the base station controller sends the indication information to the terminal through layer-3 signaling in the process of setting up a circuit domain service.

When the mobile switching center uses a new message to send the indication information to the terminal, the base station controller may send the new message to the terminal directly, namely, the new message is layer-3 signaling and the layer-3 signaling is new signaling; the base station controller may also add the new message as an independent information element into existing layer-3 signaling sent by the base station controller to the terminal, and send the layer-3 signaling to the terminal, namely, a new information element is added into the layer-3 signaling to carry the new message. The existing layer-3 signaling is an Immediate Assignment message, for example. Alternatively, the base station controller adds the new message into an existing information element of the existing layer-3 signaling sent by the base station controller to the terminal. For ease of description, the new information element and the existing information element that carries the new message may be uniformly called a dedicated information element of information indicating whether the adaptive multi rate wideband capability is supported, and is briefly known as a dedicated information element of indication information in this example. It should be noted that the dedicated information element of indication information may carry only the new message, or carry the new message together with other information. The dedicated information element of indication information is a name assigned to the information element that carries the new message for ease of subsequent description. This example does not restrict a specific implementation way in which the base station controller sends the indication information to the terminal.

After the base station controller sends the indication information to the terminal through layer-3 signaling, the terminal determines that the received indication information indicates that the mobile switching center allows reporting of the adaptive multi rate wideband capability information, and therefore, the terminal reports the adaptive multi rate wideband capability information to the mobile switching center. The terminal may use an existing field in an existing message to send the adaptive multi rate wideband capability information to the mobile switching center, or use a new message to send the adaptive multi rate wideband capability information to the mobile switching center. If the terminal determines that the received indication information indicates that the mobile switching center does not allow supporting of the adaptive multi rate wideband capability information, the terminal reports no adaptive multi rate wideband capability information to the mobile switching center, which avoids call failure caused by the terminal's reporting the adaptive multi rate wideband capability information when the mobile switching center does not support the adaptive multi rate wideband capability.

Through the description about Example 2 above, it is evident that the base station controller uses layer-3 signaling to send indication information to the terminal, and therefore, according to the layer-3 signaling sent by the base station controller, the terminal clearly knows whether the adaptive multi rate wideband capability information needs to be reported to the mobile switching center, and Example 2 can avoid call failure. Besides, because the indication information is sent by the base station controller to the terminal through layer-3 signaling, even if the voice service is set up when the terminal is in a packet transmission mode, the base station controller in Example 2 can send the indication information to the terminal successfully. In this way, the call failure, which occurs because the base station controller does not support a Packet SI Status message, is avoided when SI3 is delivered through the Packet SI Status message.

Example 3: a method for reporting capability information. The procedure of the method is shown in FIG. 3.

In FIG. 3, S300. The terminal adds adaptive multi rate wideband capability information into a new information element of a message, and sending the message to a mobile switching center. The new information element can be identified by the mobile switching center that supports the adaptive multi rate wideband capability and cannot be identified by the mobile switching center that does not support the adaptive multi rate wideband capability. The terminal mentioned here is the terminal that supports the adaptive multi rate wideband capability.

In S300, the terminal receives indication information from the base station controller or mobile switching center, where the indication information indicates whether the mobile switching center supports the adaptive multi rate wideband capability, and, according to the indication information, the terminal determines that the reporting of the adaptive multi rate wideband capability information is allowed, and therefore, the terminal adds the adaptive multi rate wideband capability information into a new information element of the message, and sends the message to the mobile switching center. Besides, even without receiving the indication information sent by the base station controller or the mobile switching center, the terminal may add the adaptive multi rate wideband capability information into a new information element of a message, and send the message to the mobile switching center on its own initiative.

The new information element in the message may carry only the adaptive multi rate wideband capability information, or carry the adaptive multi rate wideband capability information together with other information. The new information element may be called a dedicated information element of adaptive multi rate wideband capability information; also, the dedicated information element of adaptive multi rate wideband capability information in this embodiment does not mean that the information element carries only the adaptive multi rate wideband capability information.

The message sent by the terminal to the mobile switching center may be a Setup message or a Call Confirm message regardless of whether the terminal sends the message that carries the new information element on its own initiative or sends the message that carries the new information element reactively according to the received indication information. Nevertheless, the terminal may also use other messages sent to the mobile switching center to carry the new information element. This example does not restrict the name of the message that carries the new information element.

Through the description about Example 3 above, it is evident that the terminal uses a message that carries a new information element to report the adaptive multi rate wideband capability information to the mobile switching center, and the mobile switching center is unable to identify the new information element and discards the new information element in the case that the mobile switching center does not support the adaptive multi rate wideband capability information. Therefore, Example 3 avoids call failure. When the terminal sends a message that carries the new information element, the base station controller does not need to be upgraded, and, the call failure, which occurs because the base station controller does not support a Packet SI Status message, is avoided when SI3 is delivered through the Packet SI Status message.

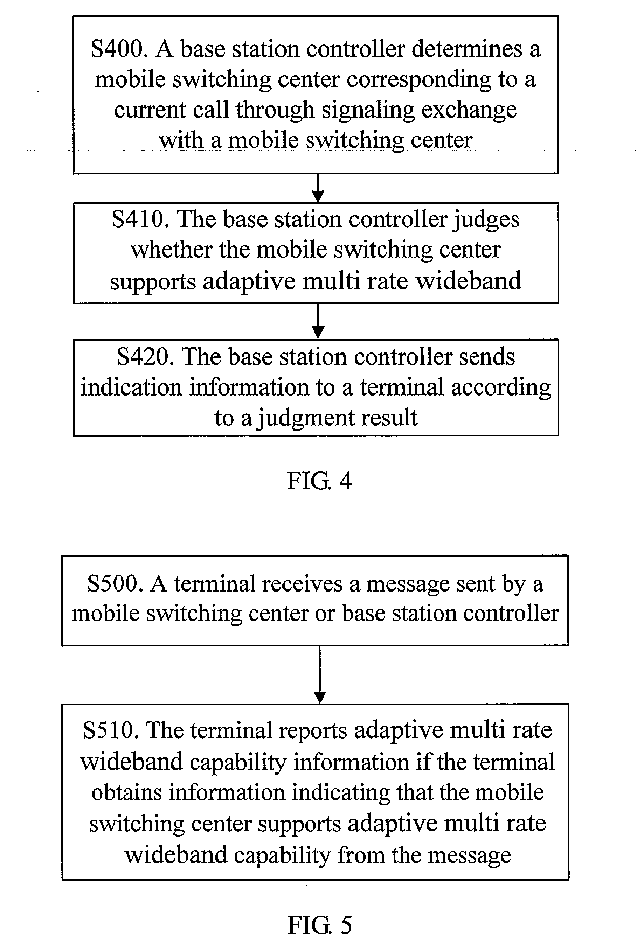

Embodiment 1 : a method for reporting capability information. The procedure of the method is shown in FIG. 4.

In FIG 4, S400. A base station controller determines a mobile switching center corresponding to a current service through signaling interaction with the mobile switching center. The procedure proceeds to S410. The signaling in S400 may be Signaling System No. 7, and the mobile switching center in S400 may be a mobile switching center in a mobile switching center resource pool.

In S400, the base station controller may determine a mobile switching center corresponding to the current service through signaling interaction with the mobile switching center in many modes. An exemplary mode is: When sending a Connect Request message, the base station controller needs to determine the mobile switching center that receives the Connect Request message, and the base station controller may determine the mobile switching center, which receives the Connect Request message, as the mobile switching center corresponding to the current service. This method of determining the mobile switching center is well applicable to the scenario that the Connect Request message is never rejected by the receiver. The Connect Request message is a Connect Request (connect request, CR) message sent by the BSC to the MSC in the process of setting up a Signaling System No. 7 link, and includes a Complete L3 message (complete layer-3 message). Another example is: Upon receiving a Connect Confirm (connect confirm, CC) message, the base station controller determines a mobile switching center, which sends the Connect Confirm message, as a mobile switching center corresponding to the current service. The second example is applicable not only to the scenario that the Connect Request message is never rejected by the receiver, but also well applicable to the scenario that the Connect Request message is possibly rejected by the receiver. The base station controller in this embodiment determines a mobile switching center corresponding to the current service through interaction of other signaling. This embodiment does not restrict a specific implementation way in which the base station controller determines the mobile switching center corresponding to the current service.

S410. The base station controller judges whether the mobile switching center corresponding to the current service supports adaptive multi rate wideband according to preset information or a message sent by the mobile switching center corresponding to the current service. The procedure proceeds to S420.

The preset information in S410 indicates whether each mobile switching center supports adaptive multi rate wideband. For example, the preset information may include a mapping relationship between the mobile switching center identifier and the support of adaptive multi rate wideband; or, the preset information may include: a list of MSCs that support adaptive multi rate wideband, and a list of MSCs that do not support adaptive multi rate wideband. This embodiment of the present invention does not restrict the mode of indication of the preset information.

When the message sent by the mobile switching center carries information indicating whether adaptive multi rate wideband is supported, the base station controller knows whether mobile switching center supports adaptive multi rate wideband according to the information carried in the message upon receiving the message sent by the mobile switching center.

The information indicating whether adaptive multi rate wideband is supported may be carried in an existing field in an existing message sent by the mobile switching center to the base station controller. The mobile switching center may add a new message to carry the information indicating whether adaptive multi rate wideband is supported. The new message is sent to the base station controller separately; or, the new message is carried in a new independent information element in an existing message sent by the mobile switching center to the base station controller, and the existing message is sent to the base station controller. This embodiment of the present invention does not restrict a specific implementation way in which the mobile switching center sends to the base station controller the information indicating whether adaptive multi rate wideband is supported.

S420. The base station controller sends to the terminal the indication information indicating whether the mobile switching center supports the adaptive multi rate wideband capability. The indication information is used to notify the terminal of whether to report adaptive multi rate wideband capability information to the mobile switching center corresponding to the current service. The base station controller may use a point-to-point message to send to the terminal the indication information indicating whether the mobile switching center supports the adaptive multi rate wideband capability. The terminal in this embodiment refers to a calling terminal and/or a called terminal of the current service.

When the base station controller sends to the terminal the indication information indicating whether the mobile switching center supports the adaptive multi rate wideband capability, the base station controller may use an existing field in an existing point-to-point message to send the indication information, or use a new message to send the indication information. For example, the base station controller adds an AMR-WB Notify message as a new message into a new information element of an existing point-to-point message sent by the base station controller to the terminal; or, the base station controller adds an AMR-WB Notify message as a new message into an existing information element of an existing point-to-point message sent by the base station controller to the terminal. For ease of description, the new information element and the existing information element are briefly known as dedicated information element of indication information; also, the dedicated information element may carry only the indication information indicating whether the mobile switching center supports the adaptive multi rate wideband capability, or carry both the indication information indicating whether the mobile switching center supports the adaptive multi rate wideband capability and other information.

After the base station controller sends the indication information to the terminal through a point-to-point message, the terminal determines that the received indication information indicates permission of reporting the adaptive multi rate wideband capability information, and therefore, the terminal reports the adaptive multi rate wideband capability information to the mobile switching center. For example, the terminal uses a Setup message or a Call Confirm message to report the adaptive multi rate wideband capability information to the mobile switching center. If the terminal determines that the received indication information indicates no permission of supporting the adaptive multi rate wideband capability information, the terminal reports no adaptive multi rate wideband capability information to the mobile switching center, which avoids call failure caused by the terminal's reporting the adaptive multi rate wideband capability information when the mobile switching center does not support the adaptive multi rate wideband capability.

If the terminal does not support the adaptive multi rate wideband capability, the terminal may be unable to identify the indication information in the point-to-point message, and may discard the indication information. For example, the terminal discards the received AMR-WB Notify message.

Through the description about Embodiment 1 above, the base station controller determines the mobile switching center corresponding to the current service, and determines whether the mobile switching center supports the adaptive multi rate wideband capability; after determining that the mobile switching center supports the adaptive multi rate wideband capability, the base station controller sends to the terminal the indication information indicative of permission of reporting the adaptive multi rate wideband capability information. After determining that the mobile switching center does not support the adaptive multi rate wideband capability, the base station controller sends to the terminal the indication information indicative of no permission of reporting the adaptive multi rate wideband capability; according to the information sent by the base station controller, the terminal clearly knows whether the adaptive multi rate wideband capability information needs to be reported to the mobile switching center. Therefore, Embodiment 1 avoids call failure. Besides, because the indication information is sent by the base station controller to the terminal through a point-to-point message, Embodiment 1 avoids the call failure when SI3 is delivered through a Packet SI Status message, where the call failure occurs because the base station controller does not support the Packet SI Status message. The base station controller can determine the mobile switching center corresponding to the current call first, and then notifies the terminal through a point-to-point message for the mobile switching center, and therefore, Embodiment 1 is well adaptable to the MSC resource pool technology.

Example 4 : a method for reporting capability information. The procedure of the method is shown in FIG 5.

In FIG. 5, S500. The terminal receives a message sent by a mobile switching center or base station controller.

The message in S500 carries indication information indicating that the mobile switching center supports the adaptive multi rate wideband capability, or does not carry the indication information.

If the message, which carries the indication information indicating that the mobile switching center supports the adaptive multi rate wideband capability, is sent by the mobile switching center, the message received by the terminal may be received before the terminal sends a Setup message or a Call Confirm message to the mobile switching center. Example 1 above has described the content of the indication information sent by the mobile switching center to the terminal, where the indication information indicates that the mobile switching center supports the adaptive multi rate wideband capability, and the content is not repeated here any further.

If the message, which carries the indication information indicating that the mobile switching center supports the adaptive multi rate wideband capability, is sent by a base station controller, the message received by the terminal may be layer-3 signaling sent by the base station controller in the process of setting up a circuit domain service, or a message sent by the base station controller to the terminal after the base station controller determines the mobile switching center corresponding to a current service of the terminal through signaling interaction with the mobile switching center.

If the message received by the terminal carries the indication information indicating that the mobile switching center supports the adaptive multi rate wideband capability, the message received by the terminal may be sent by the mobile switching center or base station controller on its own initiative, or a message returned by the mobile switching center to the terminal in response to a capability information reporting request sent by the terminal. For details, see the description in Example 2 and Embodiment 1 above.

S510. The terminal reports adaptive multi rate wideband capability information to the mobile switching center if the terminal obtains indication information from the received message, where the indication information indicates that the mobile switching center supports the adaptive multi rate wideband capability; if the terminal does not obtain the indication information from the received message, the terminal reports no adaptive multi rate wideband capability information to the mobile switching center.

The indication information indicates whether the mobile switching center supports the adaptive multi rate wideband capability, and the indication information also indicates whether the mobile switching center allows the terminal to report the adaptive multi rate wideband capability.

When the terminal reports the adaptive multi rate wideband capability information, the reported adaptive multi rate wideband capability information may be sent to the mobile switching center or base station controller by using an existing field in an existing message sent by the terminal to the mobile switching center or base station controller, or by using a new message. The terminal may send the new message directly, or add the new message as an independent information element into an existing message. The detailed examples have been given in the preceding examples and embodiments, and are not given here any further.

Through the description about Example 4 above, the terminal does not report the adaptive multi rate wideband capability information to the mobile switching center until the indication information is received, which avoids call failure.

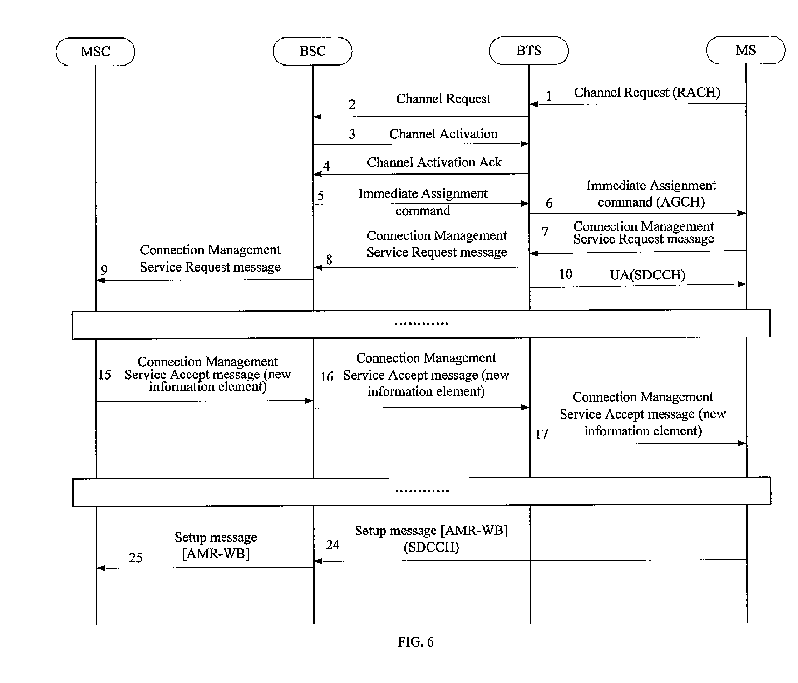

Example 5 : method of reporting capability information of a calling terminal. The procedure of the method is shown in FIG 6. The MS in FIG 5 is a calling terminal.

In FIG. 6,
S 1. An MS (terminal) sends a Channel Request message.
S2. After receiving the Channel Request message, the BTS sends a Channel Required message to the BSC.
S3. After receiving the Channel Required message, the BSC sends a Channel Activation message to the BTS.
S2. After receiving the Channel Activation message, the BTS returns a Channel Activation Ack message to the BSC.
S5. After receiving the Channel Activation Ack message, the BSC sends an Immediate Assignment Command.
S6. The Immediate Assignment Command is transmitted to the MS through the BTS.
S7. After receiving the Immediate Assignment Command, the MS sends a CM Service Request (Connection Management Service Request) message.
S8. The Connection Management Service Request message is transmitted to the BSC through the BTS.
S9. The Connection Management Service Request message is transmitted to the MSC through the BSC.
S 10. After sending the Connection Management Service Request message, the BTS sends a UA to the MS.

After receiving the Connection Management Service Request message, the MS exchanges messages with the MSC. The process of exchanging messages may be the same as the existing message exchange process, and is not detailed here any further.
S15. The MSC sends a CM Service Accept (Connection Management Service Accept) message. The Connection Management Service Accept message carries a new information element, and the new information element is MSC AMR-WB Capability Information. The "MSC AMR-WB Capability Information" information element carries a new message sent from the MSC to the MS. The new message sent from the MSC to the MS carries MSC adaptive multi rate wideband capability information, namely, carries indication information indicating whether the mobile switching center supports the adaptive multi rate wideband capability. The MSC adaptive multi rate wideband capability information tells whether the MSC supports the adaptive multi rate wideband capability or not.

The "MSC AMR-WB Capability Information" information element needs to be inherited in a BSS (base station system) MAP and an Um air interface. The inheriting is the same as inheriting certain IEs in "Cipher Response Mode" (in BSSMAP) and "Cipher Response" (in Um) in the prior art, and is not detailed here any further.
S16. The Connection Management Service Accept message is transmitted to the BTS through the BSC.
S17. The Connection Management Service Accept message is transmitted to the MS through the BTS.

After receiving the Connection Management Service Accept message, the MS exchanges messages with the MSC. The process of exchanging messages may be the same as the existing message exchange process, and is not detailed here any further.
S24. According to the "MSC AMR-WB Capability Information" information element carried in the Connection Management Service Accept message, the MS determines whether the MSC supports the adaptive multi rate wideband capability. If determining that the MSC supports the adaptive multi rate wideband capability, the MS reports the adaptive multi rate wideband capability information to the MSC through a Setup message at the time of sending the Setup message; If determining that the MSC does not support the adaptive multi rate wideband capability, the MS does not report the adaptive multi rate wideband capability information to the MSC through the Setup message. It should be noted that the MS may also determine whether the MSC supports the adaptive multi rate wideband capability before S24.
S25. The Setup message is transmitted to the MSC through the BSC.

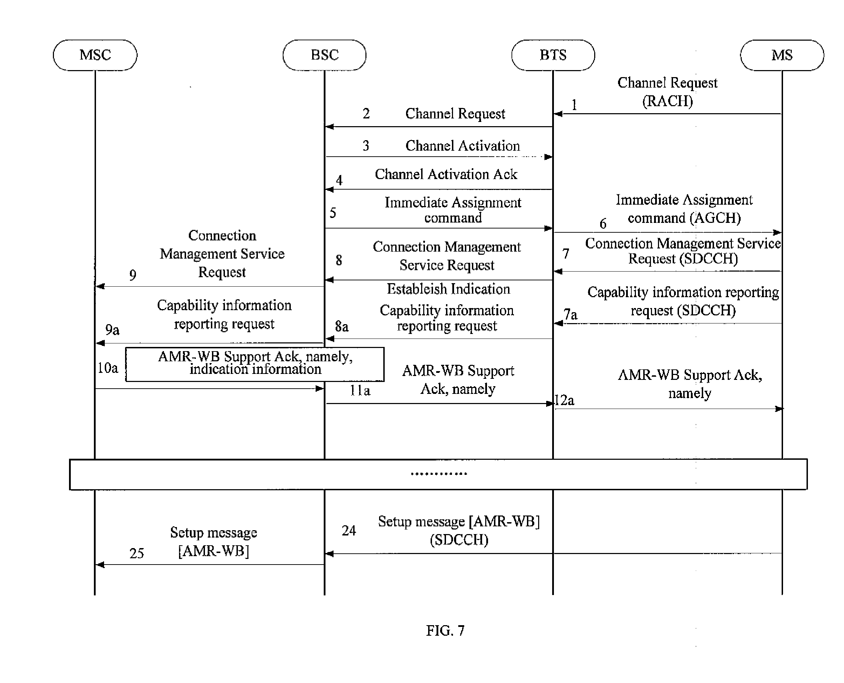

Example 6 : method of reporting capability information of a calling terminal. The procedure of the method is shown in FIG. 7. The MS in FIG 7 is a calling terminal.

In FIG. 7,
S1. An MS sends a Channel Request message.
S2. After receiving the Channel Request message, the BTS sends a Channel Required message to the BSC.
S3. After receiving the Channel Required message, the BSC sends a Channel Activation message to the BTS.
S4. After receiving the Channel Activation message, the BTS returns a Channel Activation Ack message to the BSC.
S5. After receiving the Channel Activation Ack message, the BSC sends an Immediate Assignment Command.
S6. The Immediate Assignment Command is transmitted to the MS through the BTS.
S7. After receiving the Immediate Assignment Command, the MS sends a CM Service Request message.
S7a. The MS may send a new AMR-WB Support message to the MSC at the same time when sending the CM Service Request message. The AMR-WB Support message carries a capability information reporting request.
S8. The Connection Management Service Request message is transmitted to the BSC through the BTS.
S8a. The AMR-WB Support message is transmitted to the BSC through the BTS, and the AMR-WB Support message and the Connection Management Service Request message are sent simultaneously.
S9. The Connection Management Service Request message is transmitted to the MSC through the BSC.
S9a. The AMR-WB Support message is transmitted to the MSC through the BSC, and the AMR-WB Support message and the Connection Management Service Request message may be sent simultaneously.
S10a. After receiving the AMR-WB Support message, the MSC sends a new message, namely, AMR-WB Support Ack message, to the MS. The AMR-WB Support Ack message carries indication information indicating whether the mobile switching center supports the adaptive multi rate wideband capability. That is, the AMR-WB Support Ack message tells whether the MSC supports the adaptive multi rate wideband capability or not.
S11a. The AMR-WB Support Ack message is transmitted to the BTS through the BSC.
S12a. The AMR-WB Support Ack message is transmitted to the MS through the BTS.

After receiving the AMR-WB Support Ack message, the MS exchanges messages with the MSC. The process of exchanging messages may be the same as the existing message exchange process, and is not detailed here any further.
S24. According to the information carried in the AMR-WB Support Ack message, the MS determines whether the MSC supports the adaptive multi rate wideband capability. If determining that the MSC supports the adaptive multi rate wideband capability, the MS reports the adaptive multi rate wideband capability information to the MSC through a Setup message at the time of sending the Setup message; If determining that the MSC does not support the adaptive multi rate wideband capability, the MS does not report the adaptive multi rate wideband capability information to the MSC through the Setup message. It should be noted that the MS may also determine whether the MSC supports the adaptive multi rate wideband capability before S24.
S25. The Setup message is transmitted to the MSC through the BSC.

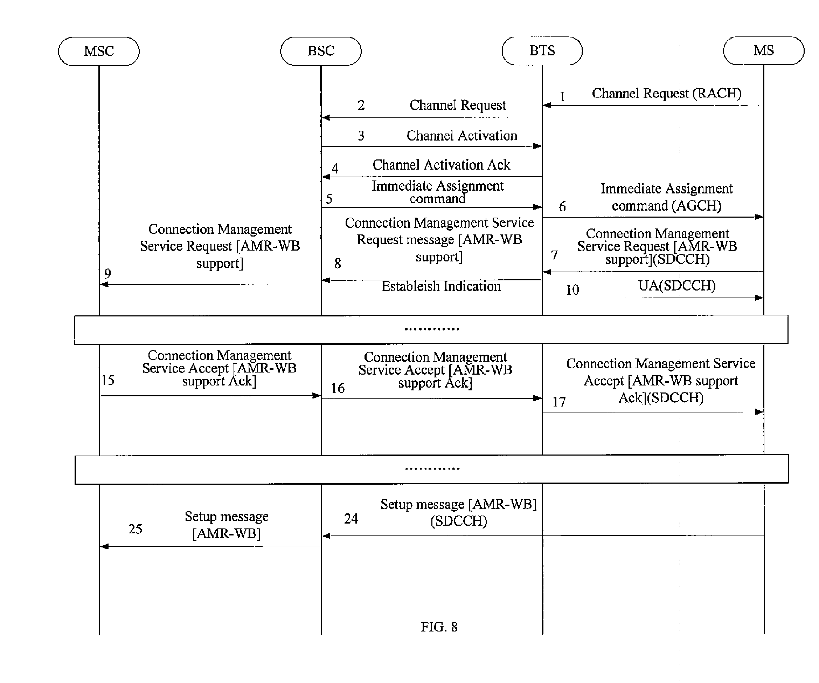

Example 7 : method of reporting capability information of a calling terminal. The procedure of the method is shown in FIG. 8. The MS in FIG. 8 is a calling terminal.

In FIG. 8,
S1. An MS sends a Channel Request message.
S2. After receiving the Channel Request message, the BTS sends a Channel Required message to the BSC.
S3. After receiving the Channel Required message, the BSC sends a Channel Activation message to the BTS.
S4. After receiving the Channel Activation message, the BTS returns a Channel Activation Ack message to the BSC.
S5. After receiving the Channel Activation Ack message, the BSC sends an Immediate Assignment Command.
S6. The Immediate Assignment Command is transmitted to the MS through the BTS.
S7. After receiving the Immediate Assignment Command, the MS sends a CM Service Request message. A new information element is added in the CM Service Request message, and the new information element carries a new AMR-WB Support message from the MS to the MSC. The AMR-WB Support message carries a capability information reporting request.
S8. The CM Service Request message is transmitted to the BSC through the BTS.
S9. The CM Service Request message is transmitted to the MSC through the BSC.
S10. After sending the Connection Management Service Request message, the BTS sends a UA to the MS.

After receiving the Connection Management Service Request message, the MS exchanges messages with the MSC. The process of exchanging messages may be the same as the existing message exchange process, and is not detailed here any further.
S15. After receiving the CM Service Request message, the MSC sends a CM Service Accept message. The CM Service Accept message carries a new message from the MSC to the MS, namely, carries an AMR-WB Support Ack message. The AMR-WB Support Ack message carries indication information indicating whether the mobile switching center supports the adaptive multi rate wideband capability. That is, the AMR-WB Support Ack message tells whether the MSC supports the adaptive multi rate wideband capability or not. The AMR-WB Support Ack message is carried in a new information element of the CM Service Accept message.
S16. The CM Service Accept message is transmitted to the BTS through the BSC.
S17. The CM Service Accept message is transmitted to the MS through the BTS.
After receiving the CM Service Accept message, the MS exchanges messages with the MSC. The process of exchanging messages may be the same as the existing message exchange process, and is not detailed here any further.
S24. According to the information carried in the AMR-WB Support Ack message in the new information element of the CM Service Accept message, the MS determines whether the MSC supports the adaptive multi rate wideband capability. If determining that the MSC supports the adaptive multi rate wideband capability, the MS reports the adaptive multi rate wideband capability information to the MSC through a Setup message at the time of sending the Setup message; If determining that the MSC does not support the adaptive multi rate wideband capability, the MS does not report the adaptive multi rate wideband capability information to the MSC through the Setup message. It should be noted that the MS may also determine whether the MSC supports the adaptive multi rate wideband capability before S24.
S25. The Setup message is transmitted to the MSC through the BSC.

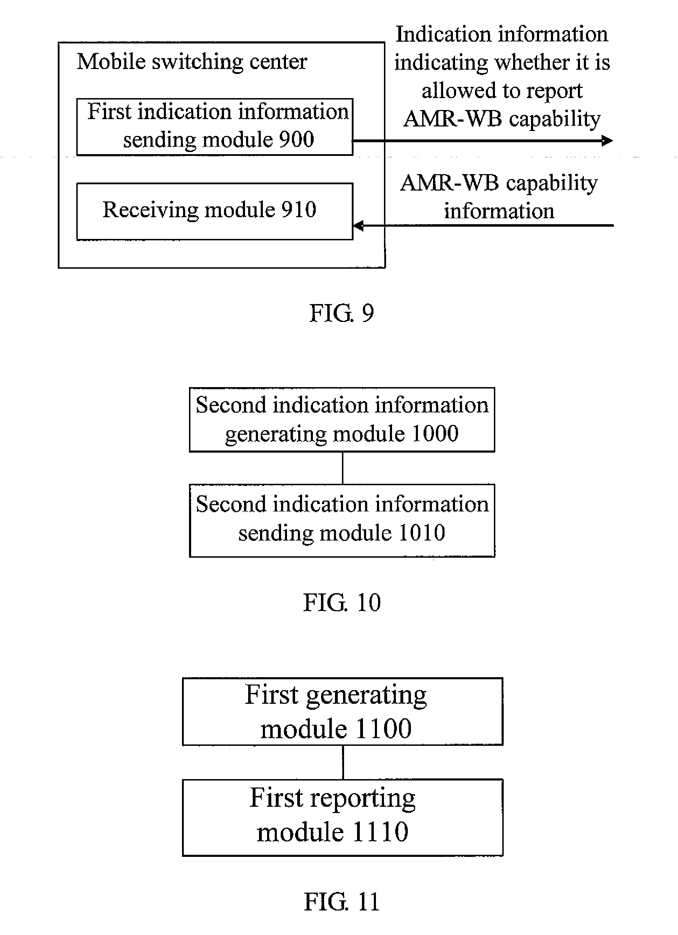

Example 8 : mobile switching center. The mobile switching center is shown in FIG. 9.

The mobile switching center in FIG. 9 includes a first indication information sending module 900, and optionally, includes a receiving module 910.

The first indication information sending module 900 is configured to send indication information to a terminal while the mobile switching center sets up a service, where the indication information indicates whether the mobile switching center supports an adaptive multi rate wideband capability. The indication information indicates whether the corresponding mobile switching center supports an adaptive multi rate wideband capability, and indicates whether the terminal is allowed to report the adaptive multi rate wideband capability to the mobile switching center.

The first indication information sending module 900 may send indication information to the terminal on its own initiative. The first indication information sending module 900 sending the indication information on its own initiative means that: The first indication information sending module 900 sends the indication information to the terminal without receiving a relevant request. The relevant request is a capability information reporting request, namely, a request for the indication information.

The first indication information sending module 900 may also send the indication information to the terminal reactively. That is, the first indication information sending module 900 receives a capability information reporting request sent by the terminal, and sends the indication information to the terminal according to the capability information reporting request, where the indication information indicates whether the mobile switching center supports the adaptive multi rate wideband capability. If the corresponding mobile switching center supports adaptive multi rate wideband, the first indication information sending module 900 may send the indication information to the terminal to indicate permission of reporting the adaptive multi rate wideband capability. In this case, the indication information may further indicate that the mobile switching center supports the adaptive multi rate wideband capability. If the mobile switching center that includes the first indication information sending module 900 does not support adaptive multi rate wideband, the first indication information sending module 900 may send no indication information to the terminal. If the mobile switching center that includes the first indication information sending module 900 does not support adaptive multi rate wideband, the first indication information sending module 900 may also send the indication information to the terminal to indicate no permission of reporting the adaptive multi rate wideband capability. In this case, the indication information may further indicate that the mobile switching center does not support the adaptive multi rate wideband capability.

Specially, if the mobile switching center that includes the first indication information sending module 900 does not support adaptive multi rate wideband, the first indication information sending module 900 may be unable to identify the capability information reporting request sent by the terminal, and may discard the received capability information reporting request directly. In this way, the first indication information sending module 900 sends no indication information indicating whether the mobile switching center supports the adaptive multi rate wideband capability to the terminal. After the terminal sends the capability information reporting request, if the terminal still receives no indication information from the mobile switching center when sending the Setup message or the Call Confirm message, the terminal determines that the mobile switching center does not allow reporting of the adaptive multi rate wideband capability information, and therefore, the terminal reports no adaptive multi rate wideband capability information to the mobile switching center.

The first indication information sending module 900 may send the indication information to the terminal before the terminal sends a Setup message or a Call Confirm message to the mobile switching center, regardless of whether the first indication information sending module 900 sends the indication information to the terminal on its own initiative or reactively. The first indication information sending module 900 may send the indication information to the terminal by using an existing field in an existing message sent to the terminal, or by using a new message.

An example of using the existing field in an existing message to send the indication information to the terminal is: The first indication information sending module 900 uses an idle bit(s) of the existing field in a Connection Management Service Accept message or a Cipher Mode command to carry the indication information, and sends the Connection Management Service Accept message or the Cipher Mode command to the terminal.

When using a new message to send the indication information to the terminal, the first indication information sending module 900 may send the new message to the terminal directly; the first indication information sending module 900 may also add the new message as an independent information element into another message sent by the mobile switching center to the terminal, and send the another message to the terminal, namely, a new information element is added in the another message to carry the new message. Besides, the first indication information sending module 900 may add the new message into an existing information element of another message sent by the mobile switching center to the terminal. This example does not restrict a specific implementation way in which the first indication information sending module 900 sends the indication information to the terminal.

Examples of the first indication information sending module 900 sending the indication information to the terminal on its own initiative and examples of the first indication information sending module 900 sending the indication information to the terminal reactively are given in Example 1 above, and are not given here any further.

The receiving module 910 is configured to receive the adaptive multi rate wideband capability information reported by the terminal according to the indication information. The adaptive multi rate wideband capability information reported by the terminal is the adaptive multi rate wideband capability information reported by the terminal to the mobile switching center after the terminal determines that the received indication information indicates that the mobile switching center allows reporting of the adaptive multi rate wideband capability.

It should be noted that, after the terminal receives the indication information sent by the mobile switching center, if the terminal determines that the received indication information indicates that the mobile switching center does not allow supporting of the adaptive multi rate wideband capability information, the terminal reports no adaptive multi rate wideband capability information to the mobile switching center, which avoids call failure caused by the terminal's reporting the adaptive multi rate wideband capability information when the mobile switching center does not support the adaptive multi rate wideband capability.

An example of the receiving module 910 receiving the adaptive multi rate wideband capability information reported by the terminal is: The receiving module 910 receives a Setup message sent by the terminal, and obtains the adaptive multi rate wideband capability information reported by the terminal from a SPEECH VERSION field of a Bearer Capability Information Element of the Setup message. Another example of the receiving module 910 receiving the adaptive multi rate wideband capability information reported by the terminal is: The receiving module 910 receives a Setup message or a Call Confirm message sent by the terminal, and obtains the adaptive multi rate wideband capability information reported by the terminal from a new information element carried in the message. This example does not restrict a specific implementation way in which the receiving module 910 obtains the adaptive multi rate wideband capability information reported by the terminal from the message sent by the terminal.

Example 2 : base station controller. The base station controller is shown in FIG. 10.

The base station controller shown in FIG. 10 includes a second indication information generating module 1000 and a second indication information sending module 1010.

The second indication information generating module 1000 is configured to add indication information into layer-3 signaling in a process of setting up a circuit domain service, where the indication information indicates whether the mobile switching center supports an adaptive multi rate wideband capability. The indication information is used to notify the terminal of whether to report adaptive multi rate wideband capability information to the mobile switching center, and the indication information indicates whether the mobile switching center supports the adaptive multi rate wideband capability.

Through preset information or by other means, the second indication information generating module 1000 knows whether the mobile switching center connected to the base station controller that includes this module supports the adaptive multi rate wideband capability.

The second indication information generating module 1000 may use an idle bit(s) in existing layer-3 signaling to carry the indication information in the process of setting up a circuit domain service; or the second indication information generating module 1000 may use a new message to carry the indication information, namely, the second indication information generating module 1000 adds the new message into a dedicated information element of indication information of the layer-3 signaling.

An example of the second indication information generating module 1000 using a field in an existing message to send the indication information is: The second indication information generating module 1000 adds the indication information into an idle bit(s) of an Immediate Assignment message.

When the second indication information generating module 1000 uses a new message to carry the indication information, the second indication information generating module 1000 may add the new message as an independent information element into layer-3 signaling sent by the base station controller to the terminal. The independent information element is briefly known as a dedicated information element of indication information. This embodiment of the present invention does not restrict a specific implementation way in which the second indication information generating module 1000 uses the layer-3 signaling to carry the indication information.

The second indication information sending module 1010 is configured to send the layer-3 signaling to the terminal. The indication information is used to notify the terminal of whether to report adaptive multi rate wideband capability information to the mobile switching center.

When the second indication information generating module 1000 uses a new message to carry the indication information, the second indication information sending module 1010 may send the new message to the terminal directly, namely, the new message is layer-3 signaling and the layer-3 signaling is new signaling. The second indication information generating module 1000 may also add the new message as an independent information element into existing layer-3 signaling sent by the base station controller to the terminal. The second indication information sending module 1010 sends the existing layer-3 signaling to the terminal, namely, the second indication information generating module 1000 adds a new information element in the existing layer-3 signaling to carry the new message. The existing layer-3 signaling is an Immediate Assignment message, for example. The second indication information sending module 1010 sends the Immediate Assignment message. Besides, the second indication information generating module 1000 may also add the new message into an existing information element of existing layer-3 signaling sent by the base station controller to the terminal, and the second indication information sending module 1010 sends the layer-3 signaling.

After the second indication information sending module 1010 sends the layer-3 signaling that carries the indication information to the terminal, the terminal determines that the received indication information indicates that the mobile switching center allows reporting of the adaptive multi rate wideband capability information, and therefore, the terminal reports the adaptive multi rate wideband capability information to the mobile switching center. The terminal may use an existing field in an existing message to send the adaptive multi rate wideband capability information to the mobile switching center, or use a new message to send the adaptive multi rate wideband capability information to the mobile switching center. If the terminal determines that the received indication information indicates that the mobile switching center does not allow supporting of the adaptive multi rate wideband capability information, the terminal reports no adaptive multi rate wideband capability information to the mobile switching center, which avoids call failure caused by the terminal's reporting the adaptive multi rate wideband capability information when the mobile switching center does not support the adaptive multi rate wideband capability.

Example 9 : terminal device. The terminal device is shown in FIG. 11.

The terminal device in FIG. 11 includes a first generating module 1100 and a first reporting module 1110.

The first generating module 1100 is configured to add adaptive multi rate wideband capability information into a new information element of a message.

The first generating module 1100 may add the adaptive multi rate wideband capability information into a new information element of a message after the terminal device receives indication information from a base station controller or mobile switching center and determines permission of reporting the adaptive multi rate wideband capability information according to the indication information, where the indication information indicates whether the mobile switching center supports the adaptive multi rate wideband capability. Besides, the first generating module 1100 may add the adaptive multi rate wideband capability information into a new information element of a message on its own initiative when the base station controller receives no indication information sent by the base station controller or mobile switching center.

The new information element in the message may carry only the adaptive multi rate wideband capability information, or carry the adaptive multi rate wideband capability information together with other information. The new information element may be called a dedicated information element of adaptive multi rate wideband capability information; also, the dedicated information element of adaptive multi rate wideband capability information in this embodiment does not mean that the information element carries only the adaptive multi rate wideband capability information.

The first reporting module 1110 is configured to send the message to the mobile switching center.

The message sent by the first reporting module 1110 to the mobile switching center may be a Setup message or a Call Confirm message regardless of whether the first generating module 1100, adds the adaptive multi rate wideband capability information into a new information element of a message on its own initiative or add the adaptive multi rate wideband capability information into a new information element of a message reactively according to the received indication informations. Nevertheless, the first generating module 1100 may also use other messages sent to the mobile switching center to carry the new information element. This example does not restrict the message that carries the new information element.

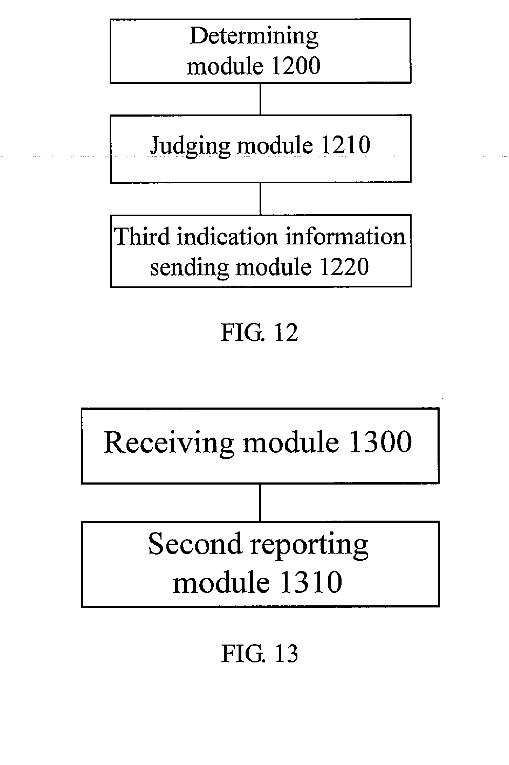

Embodiment 3 : base station controller. The base station controller is shown in FIG. 12.

The base station controller in FIG 12 includes a determining module 1200, a judging module 1210, and a third indication information sending module 1220.

The determining module 1200 is configured to determine a mobile switching center corresponding to a current service through signaling exchange between the base station controller that includes this module and the mobile switching center. The signaling here may be Signaling System No. 7, and the mobile switching center here may be a mobile switching center in a mobile switching center resource pool.

In this embodiment, the determining module 1200 determines the mobile switching center corresponding to the current service through signaling exchange between the base station controller and the mobile switching center in many modes. An exemplary mode is: When sending a Connect Request message, the base station controller needs to determine the mobile switching center that receives the Connect Request message, and the determining module 1200 may determine the mobile switching center, which receives the Connect Request message, as the mobile switching center corresponding to the current service. This mode of determining the mobile switching center is well applicable to the scenario that the Connect Request message is never rejected by the receiver. The Connect Request message is a Connect Request (connect request, CR) message sent by the BSC to the MSC in the process of setting up a Signaling System No. 7 link, and includes a Complete L3 message (complete layer-3 message). Another example is: When the base station controller receives a Connect Confirm (connect confirm, CC) message, the determining module 1200 determines a mobile switching center, which sends the Connect Confirm message, as a mobile switching center corresponding to the current service. The second example is applicable not only to the scenario that the Connect Request message is never rejected by the receiver, but also well applicable to the scenario that the Connect Request message is possibly rejected by the receiver. The determining module 1200 in this embodiment may also determine the mobile switching center corresponding to the current service through transmission of other signaling. This embodiment does not restrict a specific implementation way in which the determining module 1200 determines the mobile switching center corresponding to the current service.

The judging module 1210 is configured to judge whether the mobile switching center supports adaptive multi rate wideband according to preset information or a message sent by the mobile switching center.

The preset information here indicates whether each mobile switching center supports adaptive multi rate wideband. For example, the preset information may include a mapping relationship between the mobile switching center identifier and the support of adaptive multi rate wideband; or, the preset information may include: a list of MSCs that support adaptive multi rate wideband, and a list of MSCs that do not support adaptive multi rate wideband. This embodiment of the present invention does not restrict the mode of indication of the preset information.

When the message sent by the mobile switching center carries information indicating whether adaptive multi rate wideband is supported, the judging module 1210 knows whether mobile switching center supports adaptive multi rate wideband according to the information carried in the message when the base station controller receives the message sent by the mobile switching center.

The third indication information sending module 1220 is configured to send indication information to a calling terminal and/or a called terminal of the service according to a judgment result made by the judging module 1210, where the indication information indicates whether the mobile switching center supports an adaptive multi rate wideband capability. The indication information is used to notify the terminal of whether to report adaptive multi rate wideband capability information to the mobile switching center. The third indication information sending module 1220 may use a point-to-point message to send to the terminal the indication information indicating whether the mobile switching center supports the adaptive multi rate wideband capability. The terminal in this embodiment refers to a calling terminal and/or a called terminal of the current service.

When the third indication information sending module 1220 sends to the terminal the indication information indicating whether the mobile switching center supports the adaptive multi rate wideband capability, the third indication information sending module 1220 may use an existing field in an existing point-to-point message to send the indication information, or use a new message to send the indication information. For example, the third indication information sending module 1220 adds a new message "AMR-WB Notify" into a new information element of an existing point-to-point message sent by the base station controller to the terminal, and sends the message; or, the third indication information sending module 1220 adds a new message "AMR-WB Notify" into an existing information element of an existing point-to-point message sent by the base station controller to the terminal, and sends the message.

After the third indication information sending module 1220 sends the indication information to the terminal through a point-to-point message, the terminal determines that the received indication information indicates permission of reporting the adaptive multi rate wideband capability information, and therefore, the terminal reports the adaptive multi rate wideband capability information to the mobile switching center. For example, the terminal uses a Setup message or a Call Confirm message to report the adaptive multi rate wideband capability information to the mobile switching center. If the terminal determines that the received indication information indicates no permission of supporting the adaptive multi rate wideband capability information, the terminal reports no adaptive multi rate wideband capability information to the mobile switching center, which avoids call failure caused by the terminal's reporting the adaptive multi rate wideband capability information when the mobile switching center does not support the adaptive multi rate wideband capability.

If the terminal does not support the adaptive multi rate wideband capability, the terminal may be unable to identify the indication information in the point-to-point message, and may discard the indication information. For example, the terminal discards the received AMR-WB Notify message.

Example 10 : a terminal device. The terminal device is shown in FIG 13.

The terminal device in FIG. 13 includes a receiving module 1300 and a second reporting module 1310.

The receiving module 1300 is configured to receive a message sent by a mobile switching center or base station controller; and

The message received by the receiving module 1300 may carry indication information indicating that the mobile switching center supports the adaptive multi rate wideband capability, or does not carry the indication information.

If the message, which is received by the receiving module 1300 and carries the indication information indicating that the mobile switching center supports the adaptive multi rate wideband capability, is sent by the mobile switching center, the message received by the receiving module 1300 may be received before the terminal device sends a Setup message or a Call Confirm message to the mobile switching center. Example 1 above has described the content of the indication information sent by the mobile switching center to the terminal device, where the indication information indicates that the mobile switching center supports the adaptive multi rate wideband capability, and the content is not repeated here any further.

If the message, which is received by the receiving module 1300 and carries the indication information indicating that the mobile switching center supports the adaptive multi rate wideband capability, is sent by a base station controller, the message received by the receiving module 1300 may be layer-3 signaling sent by the base station controller in the process of setting up a circuit domain service, or a message sent by the base station controller to the terminal device after the base station controller determines the mobile switching center corresponding to the current service of the terminal through signaling interaction with the mobile switching center.

If the message received by the receiving module 1300 carries the indication information indicating that the mobile switching center supports the adaptive multi rate wideband capability, the message received by the receiving module 1300 may be sent by the mobile switching center or base station controller on its own initiative, or a message returned by the mobile switching center to the terminal in response to a capability information reporting request sent by the terminal device. For details, see the description in Example 2 and Embodiment 1 above.

The second reporting module 1310 is configured to report adaptive multi rate wideband capability information to the mobile switching center if the indication information is obtained from the message received by the receiving module 1300, where the indication information indicates that the mobile switching center supports the adaptive multi rate wideband capability; if not the indication information is obtained from the message received by the receiving module 1300, report no adaptive multi rate wideband capability information to the mobile switching center. The indication information indicates whether the mobile switching center supports the adaptive multi rate wideband capability, and also indicates whether the mobile switching center allows the terminal to report the adaptive multi rate wideband capability.

When the second reporting module 1310 reports the adaptive multi rate wideband capability information, the reported adaptive multi rate wideband capability information may be sent to the mobile switching center or base station controller by using an existing field in an existing message sent by the terminal device to the mobile switching center or base station controller, or by using a new message. The second reporting module 1310 may send the new message directly, or add the new message as an independent information element into an existing message. The detailed examples have been given in the preceding embodiments, and are not given here any further.

In Examples 1 -10 and Embodiments 1-3 above, the MS reports the adaptive multi rate wideband capability information to the MSC, and the MS may report the adaptive multi rate wideband capability information to the MSC by using the existing method, for example, by using a Speech Version field in a Bearer Capability IE in a Setup message or a Call Confirm message sent to the MSC. The MS may also report the adaptive multi rate wideband capability information to the MSC by using a new message. For example, the MS does not use a Bearer Capability IE in a Setup message or a Call Confirm message to report the adaptive multi rate wideband capability information, but adds the AMR-WB capability information as a new information element in the Setup message or the Call Confirm message sent to the MSC. The new information element may inherit the structure of the existing Bearer Capability IE; or may be different from the structure of the Bearer Capability IE, for example, with the Speech Version field being an independent IE.

When the terminal uses the Setup message to report the adaptive multi rate wideband capability information, an exemplary structure of the Setup message is shown in Table 1.

**Table 1**

| Table 9.70/3GPP TS 24.008: SETUP message content (network to mobile station direction) | | | | | |
|---|---|---|---|---|---|
| IEI | Information element | Type/Reference | Presence | Format | Length |
| | Call control | Protocol discriminator | M | V | 1/2 |
| | Protocol discriminator | 10.2 | | | |
| | Transaction identifier | Transaction identifier | M | V | 1/2 |
| | | 10.3.2 | | | |
| | Setup | Message type | M | V | 1 |
| | Message type | 10.4 | | | |
| D- | BC repeat indicator | Repeat indicator | C | TV | 1 |
| | | 10.5.4.22 | | | |
| 04 | Bearer capability 1 | Bearer capability | O | TLV | 3-16 |
| | | 10.5.4.5 | | | |
| 04 | Bearer capability 2 | Bearer capability | O | TLV | 3-16 |
| | | 10.5.4.5 | | | |
| 1C | Facility | Facility | O | TLV | 2-? |
| | | 10.5.4.15 | | | |
| 1E | Progress indicator | Progress indicator | O | TLV | 4 |
| | | 10.5.4.21 | | | |
| 34 | Signal | Signal | O | TV | 2 |
| | | 10.5.4.23 | | | |
| 5C | Calling party BCD | Calling party BCD num. | O | TLV | 3-14 |
| | Number | 10.5.4.9 | | | |
| 5D | Calling party sub- | Calling party subaddr. | O | TLV | 2-23 |
| | Address | 10.5.4.10 | | | |
| 5E | Called party BCD | Called party BCD num. | O | TLV | 3-19 |
| | Number | 10.5.4.7 | | | |
| 6D | Called party sub- | Called party subaddr. | O | TLV | 2-23 |
| | Address | 10.5.4.8 | | | |
| 74 | Redirecting party BCD number | Redirecting party BCD num. | O | TLV | 3-19 |
| | | 10.5.4.21b | | | |
| 75 | Redirecting party sub-address | Redirecting party subaddress. | O | TLV | 2-23 |
| | | 10.5.4.21c | | | |
| D- | LLC repeat indicator | Repeat indicator | O | TV | 1 |
| | | 10.5.4.22 | | | |
| 7C | Low layer | Low layer comp. | O | TLV | 2-18 |
| | Compatibility I | 10.5.4.18 | | | |
| 7C | Low layer | Low layer comp. | C | TLV | 2-18 |
| | Compatibility II | 10.5.4.18 | | | |
| D- | HLC repeat indicator | Repeat indicator | O | TV | 1 |
| | | 10.5.4.22 | | | |
| 7D | High layer | High layer comp. | O | TLV | 2-5 |
| | Compatibility i | 10.5.4.16 | | | |
| 7D | High layer | High layer comp. | C | TLV | 2-5 |
| | Compatibility ii | 10.5.4.16 | | | |
| 7E | User-user | User-user | O | TLV | 3-35 |
| | | 10.5.4.25 | | | |
| 8- | Priority | Priority Level | O | TV | 1 |
| | | 10.5.1.11 | | | |
| 19 | Alert | Alerting Pattern | O | TLV | 3 |
| | | 10.5.4.26 | | | |
| 2F | Network Call Control | Network Call Control cap. | O | TLV | 3 |
| | Capabilities | 10.5.4.29 | | | |
| 3A | Cause of No CLI | Cause of No CLI | O | TLV | 3 |
| | | 10.5.4.30 | | | |
| 41 | Backup bearer capability | Backup bearer capability | O | TLV | 3-15 |
| | | 10.5.4.4a | | | |
| Xx | AMR-WB capability | AMR-WB capability | O | TLV | 3-16 |
| | | | | | |

In Table 1 above, the AMR-WB Capability information element is a new information element, and is designed to carry the adaptive multi rate wideband capability information reported by the MS to the MSC. The IEI (information element identifier) of the AMR-WB Capability information element may be allocated by the network beforehand, and the AMR-WB Capability information element may be described in the mode of the existing Speech Version, or described in the mode of the Bearer capability IE, or described in other modes. An exemplary description mode of the AMR-WB Capability information element is shown in FIG. 2.

**Table 2**

| 8 | 7 | 6 | 5 | 4 | 3 | 2 | 1 | |
|---|---|---|---|---|---|---|---|---|
| | AMR-WB capability IEI | | | | | | | octet 1 |
| Length of the AMR-WB capability contents | | | | | | | | octet 2 |
| 0/1 | 0 | 0 | 0 | | | | | |
| ext | coding | spare | spare | Speech version | | | | octet 3 |
| | | | | Indication | | | | |
| 0/1 | 0 | 0 | 0 | | | | | |
| ext | coding | spare | spare | Speech version | | | | octet 3a * |
| | | | | Indication | | | | |
| 0/1 | 0 | 0 | 0 | | | | | |
| ext | coding | spare | spare | Speech version | | | | octet 3b etc* |
| | | | | Indication | | | | |

In Table 2, the first byte of the AMR-WB Capability information element is the IEI of the AMR-WB Capability information element, and the second byte is the length of the AMR-WB Capability information element. The third byte and subsequent bytes are the content of the AMR-WB supported by the terminal. Because the terminal may support different types of AMR-WB such as full-rate channel AMR-WB and half-rate channel AMR-WB, one byte is be not enough for describing the content, and the content may be described by extending the bit indication and using subsequent bytes such as 3a* and 3b*.

After reading the foregoing embodiments, those skilled in the art are clearly aware that the embodiments of the present invention may be implemented through hardware, or, preferably in most circumstances, through software in addition to a necessary universal hardware platform. Therefore, all or part of the novelty of the present invention may be embodied in a software product. The software product may be stored in storage media such as ROM/RAM, magnetic disk, or CD-ROM, and incorporates several instructions for instructing a computer device (such as personal computer, server, or network device) to execute the method specified in any embodiment of the present invention or a part of the embodiment.

Although the present invention has been described through several preferred embodiments, the present invention is not limited to such embodiments. It is apparent that those skilled in the art can make modifications and variations to the present invention without departing from a scope of the present invention. The present invention is intended to cover the modifications and variations provided that they fall in the scope of protection defined by the following claims or their equivalents.

## Claims

1. A method for reporting capability information, comprising:
determining (S400), by a base station controller, a mobile switching center corresponding to a current service of a terminal through signaling interaction with the mobile switching center;
judging (S410), by the base station controller, whether the mobile switching center corresponding to the current service supports an adaptive multi rate wideband capability according to preset information or a message sent by the mobile switching center corresponding to the current service; and
sending (S420), by the base station controller, indication information to a calling terminal and/or a called terminal of the service according to a judgment result, wherein the indication information indicates whether the mobile switching center supports the adaptive multi rate wideband capability, and the indication information is used to notify the terminal of whether to report adaptive multi rate wideband capability information to the mobile switching center corresponding to the current service.

2. The method according to claim 1, wherein:
the determining, by the base station controller, the mobile switching center corresponding to the current service through the signaling interaction with the mobile switching center, comprises:
determining, by the base station controller, a mobile switching center that receives a connect request message as the mobile switching center corresponding to the current service; or
determining, by the base station controller, a mobile switching center that sends a connect confirm message as the mobile switching center corresponding to the current service.

3. A base station controller, comprising:
a determining module (1200), configured to determine a mobile switching center corresponding to a current service through signaling interaction between the base station controller and the mobile switching center;
a judging module (1210), configured to judge whether the mobile switching center corresponding to the current service supports an adaptive multi rate wideband capability according to preset information or a message sent by the mobile switching center corresponding to the current service; and
an indication information sending module (1220), configured to send indication information to a calling terminal and/or a called terminal of the service according to a judgment result, wherein the indication information indicates whether the mobile switching center supports the adaptive multi rate wideband capability, and the indication information is used to notify the terminal of whether to report adaptive multi rate wideband capability information to the mobile switching center corresponding to the service.

## Patentansprüche

1. Verfahren zum Berichten von Fähigkeitsinformationen, das Folgendes umfasst:
Bestimmen (S400) einer Mobilfunkvermittlungsstelle, die einem aktuellen Dienst eines Endgeräts entspricht, durch eine Basisstationssteuerung über Signalisierungszusammenwirkung mit der Mobilfunkvermittlungsstelle;
Beurteilen (S410) durch die Basisstationssteuerung, ob die Mobilfunkvermittlungsstelle, die dem aktuellen Dienst entspricht, eine adaptive Mehrfachraten-Breitbandfähigkeit unterstützt, gemäß voreingestellten Informationen oder einer durch die Mobilfunkvermittlungsstelle, die dem aktuellen Dienst entspricht, gesendeten Nachricht; und
Senden (S420) durch die Basisstationssteuerung von Angabeinformationen zu einem rufenden Endgerät und/oder einem gerufenen Endgerät des Dienstes gemäß einem Beurteilungsergebnis, wobei die Angabeinformationen angeben, ob die Mobilfunkvermittlungsstelle die adaptive Mehrfachraten-Breitbandfähigkeit unterstützt, und wobei die Angabeinformationen verwendet werden, dem Endgerät zu melden, ob es Informationen zur adaptiven Mehrfachraten-Breitbandfähigkeit zu der Mobilfunkvermittlungsstelle, die dem aktuellen Dienst entspricht, senden soll.

2. Verfahren nach Anspruch 1, wobei:
das Bestimmen der Mobilfunkvermittlungsstelle, die dem aktuellen Dienst entspricht,
durch die Basisstationssteuerung über das Signalisierungszusammenwirken mit der Mobilfunkvermittlungsstelle Folgendes umfasst:
Bestimmen einer Mobilfunkvermittlungsstelle, die eine Verbindungsanforderungsnachricht empfängt, durch die Basisstationssteuerung als die Mobilfunkvermittlungsstelle, die dem aktuellen Dienst entspricht; oder
Bestimmen einer Mobilfunkvermittlungsstelle, die eine Verbindungsbestätigungsnachricht sendet, durch die Basisstationssteuerung als die Mobilfunkvermittlungsstelle, die dem aktuellen Dienst entspricht.

3. Basisstationssteuerung, die Folgendes umfasst:
ein Bestimmungsmodul (1200), das konfiguriert ist, eine Mobilfunkvermittlungsstelle, die einem aktuellen Dienst entspricht, über Signalisierungszusammenwirken zwischen der Basisstationssteuerung und der Mobilfunkvermittlungsstelle zu bestimmen;
ein Beurteilungsmodul (1210), das konfiguriert ist, gemäß voreingestellten Informationen oder einer durch die Mobilfunkvermittlungsstelle gesendeten Nachricht, die dem aktuellen Dienst entspricht, zu beurteilen, ob die Mobilfunkvermittlungsstelle, die dem aktuellen Dienst entspricht, eine adaptive Mehrfachraten-Breitbandfähigkeit unterstützt; und
ein Angabeinformationssendemodul (1220), das konfiguriert ist,
Angabeinformationen zu einem rufenden Endgerät und/oder einem gerufenen Endgerät des Dienstes gemäß einem Beurteilungsergebnis zu senden, wobei die Angabeinformationen angeben, ob die Mobilfunkvermittlungsstelle die adaptive Mehrfachraten-Breitbandfähigkeit unterstützt, und wobei die Angabeinformationen verwendet werden, um dem Endgerät zu melden, ob es Informationen zur adaptiven Mehrfachraten-Breitbandfähigkeit zu der Mobilfunkvermittlungsstelle, die dem Dienst entspricht, senden soll.

## Revendications

1. Procédé de communication d'informations de capabilité, comprenant :
la détermination (S400), par un contrôleur de station de base, d'un centre de commutation de services mobiles correspondant à un service courant d'un terminal par interaction de signalisation avec le centre de commutation de services mobiles ;
le jugement (S410), par le contrôleur de station de base, que le centre de commutation de services mobiles correspondant au service courant supporte ou non une capabilité de large bande à débits multiples adaptative en fonction d'informations préétablies ou d'un message envoyé par le centre de commutation de services mobiles correspondant au service courant ; et
l'envoi (S420), par le contrôleur de station de base, d'informations d'indication à un terminal appelant et/ou un terminal appelé du service en fonction d'un résultat de jugement, les informations d'indication indiquant que le centre de commutation de services mobiles supporte ou non la capabilité de large bande à débits multiples adaptative, et les informations d'indication étant utilisées pour notifier le terminal qu'il convient ou non de communiquer les informations de capabilité de large bande à débits multiples adaptative au centre de commutation de services mobiles correspondant au service courant.

2. Procédé selon la revendication 1, dans lequel :
la détermination, par le contrôleur de station de base, du centre de commutation de services mobiles correspondant au service courant par l'interaction de signalisation avec le centre de commutation de services mobiles comprend :
la détermination, par le contrôleur de station de base, d'un centre de commutation de services mobiles qui reçoit un message de requête de connexion comme centre de commutation de services mobiles correspondant au service courant ; ou
la détermination, par le contrôleur de station de base, d'un centre de commutation de services mobiles qui envoie un message de confirmation de connexion comme centre de commutation de services mobiles correspondant au service courant.

3. Contrôleur de station de base, comprenant :
un module de détermination (1200), configuré pour déterminer un centre de commutation de services mobiles correspondant à un service courant par interaction de signalisation entre le contrôleur de station de base et le centre de commutation de services mobiles ;
un module de jugement (1210), configuré pour juger que le centre de commutation de services mobiles correspondant au service courant supporte ou non une capabilité de large bande à débits multiples adaptative en fonction d'informations préétablies ou
d'un message envoyé par le centre de commutation de services mobiles correspondant au service courant ; et
un module d'envoi d'informations d'indication (1220), configuré pour envoyer des informations d'indication à un terminal appelant et/ou un terminal appelé du service en fonction d'un résultat de jugement, les informations d'indication indiquant que le centre de commutation de services mobiles supporte ou non la capabilité de large bande à débits multiples adaptative, et les informations d'indication étant utilisées pour notifier le terminal qu'il convient ou non de communiquer des informations de capabilité de large bande à débits multiples adaptative au centre de commutation de services mobiles correspondant au service.
